# EUROPÄISCHE PATENTSCHRIFT

(11) **EP 1 145 817 B1**
(45) Veröffentlichungstag und Bekanntmachung des Hinweises auf die Patenterteilung: **27.10.2004**
(21) Anmeldenummer: 00107725.4
(22) Anmeldetag: 11.04.2000
(51) Int. Cl.: B29C 44/12

(54) **Herstellung schaumgefüllter Sandwichelemente mit Schaumauftrag in Kassetten**
Production of foam filled sandwich elements, treated as individual units
Production d'éléments de sandwich remplis de mousse, traités en tant que différentes unités

(43) Veröffentlichungstag der Anmeldung: 17.10.2001
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- EP-A- 0 896 976
- EP-A- 0 974 726
- US-A- 4 518 550

## Beschreibung

Diese Erfindung bezieht sich auf ein Verfahren zur Herstellung eines Sandwichelements, das in fertigem Zustand aus zwei Deckschichten, einem Schaummaterial dazwischen und einem die Deckschichten in einem Außenrandbereich verbindenden und das Schaummaterial in dem Sandwichelement einschließenden Rahmen besteht. Bei diesem Verfahren wird das Schaummaterial oder eine zu diesem Schaummaterial ausreagierende Vorläuferflüssigkeit mit einer Auftragsvorrichtung aufgebracht, wobei das Sandwichelement dabei noch nicht mit einer der beiden Deckschichten verbunden ist, sondern lediglich die andere Deckschicht mit dem Rahmen verbunden ist.

Im folgenden wird der Einfachheit halber diese andere Deckschicht als untere Deckschicht bezeichnet und die nach dem Schaumauftrag mit dem Rahmen zu verbindende Deckschicht als obere Deckschicht. Im Sinn dieser Nomenklatur ist das Sandwichelement beim Schaumauftrag also oben offen. Diese Unterscheidung hat natürlich keine einschränkende Bedeutung für das fertige Sandwichelement.

Nach dem Verbinden des Rahmens mit der oberen Deckschicht wird das geschlossene Sandwichelement mit Schauminhalt in eine Doppelbandanlage eingefahren, in der unter Festlegung des Abstandes der beiden Deckschichten zur Verhinderung eines Auseinanderdrückens der Deckschichten durch den ausreagierenden Schaum und in temperierter Weise eine vollständige Reaktion des Schaummaterials unter Ausfüllung möglichst des gesamten Sandwichelementinhalts bewirkt wird. Die Erfindung richtet sich also auf das Beschäumen noch einseitig flächig offener Sandwichelemente vor dem Einlauf in eine Doppelbandanlage.

Das Dokument EP 0 974 726 A2 zeigt den Gegenstand des Oberbegriffs des Anspruchs 1 und des Anspruchs 10.

Das Dokument EP 0 896 976 beschäftigt sich mit Materialaspekten der zu verwendenden Schaummaterialien.

Das Dokument US 4,518,550 zeigt ebenfalls Sandwichelemente, die mit Hartschaum ausgefüllt werden, wobei eine Presseinrichtung auf die Verarbeitung von Elementen mit herstellungs- oder feuchtigkeitsinduzierten Toleranzen angepasst sein soll.

Ausgehend von diesem Stand der Technik liegt der Erfindung das technische Problem zugrunde, das Verfahren des Aufbringens des Schaummaterials oder der Vorläuferflüssigkeit weiter zu verbessern.

Erfindungsgemäß wird dieses Problem durch die Merkmale das unabhängigen Ansprüche 1 und 10 gelöst.

Konventionellerweise sind die Kassetten nämlich i. d. R. auf einer kontinuierlichen unteren Deckschicht gebildet worden, d.h. auf einer durchgehenden, von einem sogenannten Coil abgewickelten unteren Deckschichtbahn. Dadurch hingen die Kassetten über die Deckschicht aneinander, wurden in diesem Zustand beschäumt, mit der oberen Deckschicht versehen, durch die Doppelbandanlage gefahren und erst danach vereinzelt. Zwar ist diese Vorgehensweise im Hinblick auf einen möglichst einfachen Aufbau der notwendigen Transporteinrichtungen und auf eine weitgehende Integration des Produktionsprozesses sinnvoll und wurde aus diesem Grund auch durchgeführt. Jedoch haben die Erfinder den Gedanken entwickelt, daß eine Vereinzelung der Kassetten, d.h. eine Beschäumung von Kassetten, die nicht aneinander hängen, insbesondere also jeweils separate untere Deckschichtstücke aufweisen, spezifische Vorteile mit sich bringt. Die vereinzelten Kassetten können nunmehr auch per Hand oder anderweitig einzeln der das erfindungsgemäße Beschäumen durchführenden Vorrichtung, die im folgenden als Beschäumstation bezeichnet wird, zugeführt werden und sind bereits vor dem Beschäumen in flexibler Weise transportabel. Deswegen muß die Beschäumstation nicht mit der Anlage zur Herstellung der Kassetten an einer Produktionsstraße integriert zusammengefaßt sein. Vielmehr können die beiden Produktionsanlagenteile relativ unabhängig voneinander getrennt betrieben werden, und zwar durchaus auch örtlich getrennt. Es können also auch von einer anderen Produktionsstätte zugelieferte Kassetten an einer Fabrikationsstelle mit Beschäumstation und Doppelbandanlage weiter verarbeitet werden.

Die Erfindung sieht aber zudem vor, mit derselben Beschäumstation, konkret mit derselben Auftragsvorrichtung, Kassetten unterschiedlichen Typs nacheinander, auch "in bunter Reihe", zu beschäumen. Die Verschiedenheit der Kassetten kann sich dabei auf die verwendeten Materialien oder Formate, auf verschiedene Ausschnitte (etwa für Fenster) usw. beziehen. Es kann also insbesondere eine leistungsfähige Doppelbandanlage mit vorgeschalteter durchsatzstarker Beschäumstation verwendet werden, wobei das quantitative Aufkommen unterschiedlicher Kassettentypen zusammengenommen eine verbesserte Ökonomie des Gesamtprozesses erlaubt. Dies gilt sowohl für die Produktion der Kassetten in unmittelbarer Nachbarschaft als auch für den Transport der Kassetten von anderen Fabrikationsstätten her.

Bevorzugt richtet sich die Erfindung auf die Beschäumung von Kassetten mit PUR/PIR-Schaummaterialien bzw. zugehörigen Vorläuferflüssigkeiten. Weiterhin richtet sich die Erfindung bevorzugt auf Sandwich-Türelemente, bei denen die Deckschichten also die sichtbaren Türflächen bilden bzw. als Türflächen mit sichtbaren Beschichtungen versehen sind, wobei die Tür seitlich im allgemeinen durch den Rahmen abgeschlossen ist. Dabei kann die Erfindung beispielsweise die Beschäumung von Türkassetten mit verschiedenen Formaten, verschiedenen Deckschichtmaterialien oder Fenster- bzw. Schloßausschnitten und dergleichen mehr ermöglichen.

Vorzugsweise weist die Auftragsvorrichtung einen selbstreinigenden Rezirkulationsmischkopf auf, der die Unterbrechung des Auftrags innerhalb einzelner Kassetten oder insbesondere zwischen den Kassetten ermöglicht, ohne daß durch Ausreaktion von Materialien mit kurzen Startzeiten innerhalb des Mischkopfs Probleme entstehen können.

Dabei richtet sich die Erfindung sowohl auf das entsprechende Herstellungsverfahren als auch auf eine hierfür ausgelegte Produktionsanlage. Dementsprechend ist die folgende Beschreibung der Erfindung einschließlich der Ausführungsbeispiele sowohl im Hinblick auf die damit explizit und implizit offenbarten Verfahrensmerkmale als auch auf die Vorrichtungsmerkmale zu verstehen.

Die verwendete Doppelbandanlage ist vorzugsweise druckbegrenzt, gibt also bei Überschreitung eines bestimmten Maximaldrucks in dem Sandwichelement in der Höhe nach, um Beschädigungen der Doppelbandanlage beispielsweise in Folge versehentlich zu großer Schaummengen in ein hierfür nicht vorgesehenes Kassettenformat zu vermeiden.

Ferner weist die Doppelbandanlage vorzugsweise eine Oberdruckrolle am Eingang auf, die zur Höhenkontrolle dient und für eine Notunterbrechung sorgt, wenn versehentlich ein für die Doppelbandanlage zu hohes Sandwichelement eingefahren wird. Auch dadurch können Beschädigungen vermieden werden, die nicht nur mit einem teuren Produktionsausfall, sondern bei den mechanisch komplexen Doppelbandanlagen auch mit erheblichen direkten materiellen Schäden verbunden sein könnten.

Durch solche Vorsichtsmaßnahmen kann vermieden werden, daß beispielsweise bei einer Handbeschickung der Beschäumstation und automatischem Weitertransport zur Doppelbandanlage, oder bei Fehlern in der "bunten Reihe", Schäden in der Doppelbandanlage auftreten.

Zu weiteren Ausführungsformen der Erfindung wird auf die Ansprüche 8 - 10 verwiesen.

Im folgenden wird ein Ausführungsbeispiel der Erfindung im einzelnen dargestellt. Die dabei offenbarten Einzelmerkmale können auch in anderen als den dargestellten Kombinationen erfindungswesentlich sein. Im einzelnen zeigt:
Fig. 1 eine Draufsicht auf den wesentlichen Teil einer Produktionsanlage für Sandwichelemente nach dem erfindungsgemäßen Verfahren;
Fig. 2 eine Ausschnittsdarstellung zu Fig. 1.

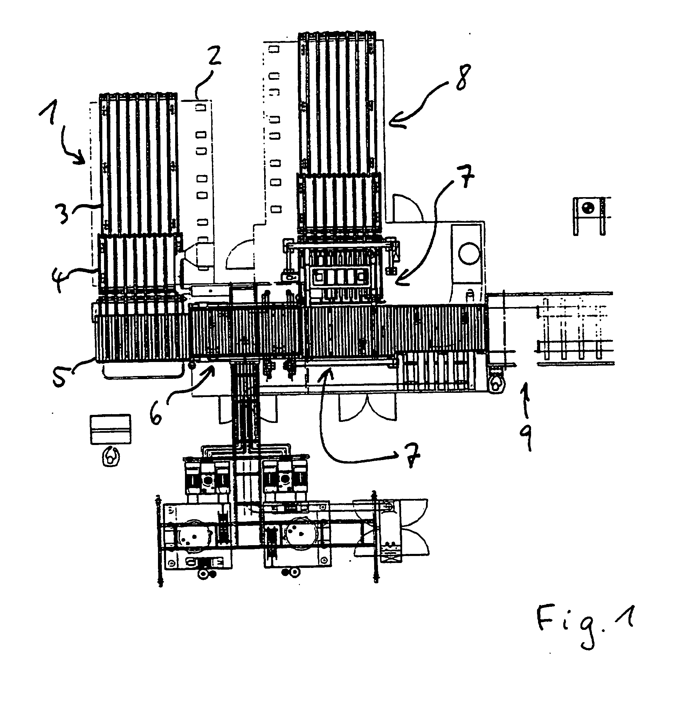

Fig. 1 zeigt eine erfindungsgemäße Produktionsanlage für Sandwichelemente in Draufsicht. Bei den Sandwichelementen handelt es sich bei diesem Beispiel um Türelemente aus zwei plattenartigen und von einem Rahmen in einem Außenbereich verbundenen Deckschichten. Die Sandwichtürelemente sind dabei mit einem PUR/PIR-Schaum gefüllt. Fig. 1 gibt einen Überblick über den gesamten Verfahrensablauf.

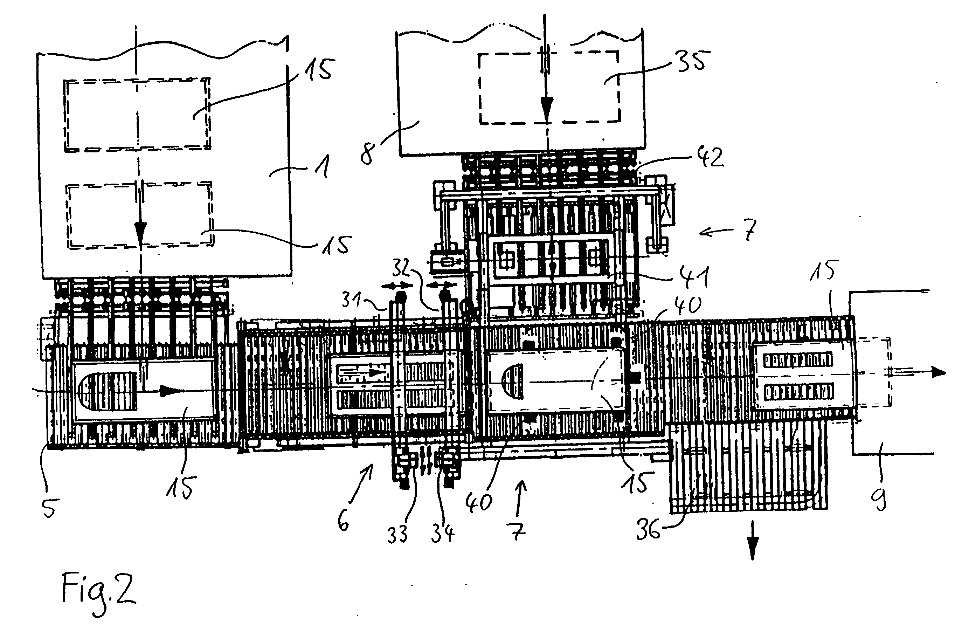

Dabei werden die erfindungsgemäßen Kassetten (die im folgenden bei der Beschreibung von Fig. 2 mit 15 bezeichnet sind) zunächst in einem Durchlaufofen 1 vorgewärmt. Die Kassetten bestehen aus dem Rahmen und einer der Deckschichten, nach der Nomenklatur in dieser Anmeldung der unteren Deckschicht. Weil die Kassetten vereinzelt transportiert und verarbeitet werden, kann die erfindungsgemäße Produktionsanlage auch eine "bunte Reihe" verschiedener Kassettentypen verarbeiten.

In dem Ofen 1 werden die Kassetten über eine Riemenfördereinrichtung bewegt, die aus einem in dem in Fig. 1 dargestellten Außenumriß des Ofengehäuses 2 erkennbaren ersten Segment 3 und einem zweiten Segment 4 besteht. Beim Durchlaufen des Ofens 1 werden sie auf eine vorgegebene Prozeßtemperatur erwärmt, die am Ofenauslauf, in Fig. 1 also am unteren Ende, vorliegen muß.

Die Einzelheiten zu dem Betriebsverfahren des Durchlaufofens ergeben sich aus einer Parallelanmeldung der selben Anmelderin vom gleichen Anmeldetag mit dem Titel "Vorwärmtechnik mit Leistungsdrosselung bei Betriebsunterbrechungen". Wesentlich ist dabei, daß der Ofen in vier getrennt voneinander betreibbare Zonen eingeteilt ist, mit denen sich bei Betriebsunterbrechungen ein angenähertes Temperaturprofil einstellen läßt, das den tatsächlichen Temperaturen von Kassetten entspricht, die diese bei Durchlauf durch den Durchlaufofen 1 im Normalbetrieb annehmen. Hierdurch ist es möglich, eine Überhitzung von Kassetten bei Betriebsunterbrechungen zu verhindern.

Das zweite Segment 4 der Fördereinrichtung übergibt die Kassetten auf eine sogenannte Winkelstation, die den Anfang einer Rollenfördereinrichtung 5 bildet und in der zwischen die Rollen der Rollenfördereinrichtung 5 eine Riemenfördereinrichtung eingreift. Dabei ist einstellbar, ob die Rollen oder die Riemen transportieren (Hubbewegung), so daß ein im Sinn der Fig. 1 zunächst vertikal gerichteter und danach horizontal gerichteter Transport der Kassetten möglich ist.

Die vorgewärmten Kassetten gelangen dann in den Bereich einer Beschäumungsstation 6, nämlich einer Doppelportalanlage. Dort werden sie mit zwei Rezirkulationsmischköpfen mit einem zu einem PUR/PIR-Schaum ausreagierenden Reaktionsgemisch gefüllt. Hierzu wird verwiesen auf eine Parallelanmeldung der selben Anmelderin vom gleichen Anmeldetag mit dem Titel "Schaumauftrag mit zweidimensional verfahrbarer Auftragsvorrichtung", deren Offenbarungsgehalt hier inbegriffen ist. Die Mischköpfe der Doppelportalanlage sind jeweils zweidimensional verfahrbar, damit der Beschäumungsvorgang bei optimierter Prozeßzeit und Flächengleichmäßigkeit ablaufen kann. (Fig. 2 zeigt die Portale mit den Bezugsziffern 31 und 32 und die Mischköpfe mit 33 und 34. Die Verfahrbewegungen sind dort mit Pfeilen angedeutet.) Die Vorwärmung der Kassetten ist ausschlaggebend für den Start der Reaktion des Reaktionsgemisches zu dem PUR/PIR-Schaum. Der Wärmeverlust auf dem Weg von dem Ofen 1 bis zu der Beschäumungsstation 6 ist dabei zu berücksichtigen.

Wesentlich ist außerdem, daß es sich bei den Mischköpfen um selbstreinigende Rezirkulationsmischköpfe handelt, mit denen relativ schnelle Ein-/Ausschaltvorgänge möglich sind. Damit besteht bei der zweidimensionalen Verfahrbarkeit die Möglichkeit, den Schaumauftrag beim Überfahren beispielsweise einer Aussparung, in die kein Schaum gelangen soll, kurzfristig ein-/auszuschalten, ohne nennenswertes Nachtropfen und ohne daß sich dabei durch eine Reaktion des Schaummaterials im Austrittskanal des Mischkopfes Verstopfungen ergeben.

Die vollständig beschäumten Kassetten werden dann aus der Beschäumstation 6 mit der Rollenfördereinrichtung 5 weitergefahren, und zwar in den Bereich einer automatischen Einklipsvorrichtung 7 mit einem Vakuumsaugwagen. Dort werden obere Deckschichtelemente (in Fig. 2: 35), die in einem weiteren Durchlaufofen 8 erwärmt worden sind, von dem Vakuumsaugwagen angesaugt und auf die beschäumte Kassette 15 aufgeklipst. Damit entsteht ein geschlossenes Sandwichelement, in dem der PUR/PIR-Schaum noch vollständig ausreagieren muß.

Zu den technischen Einzelheiten der Funktionsweise der automatischen Einklipsvorrichtung 7 wird ebenfalls auf eine Parallelanmeldung vom selben Anmeldetag der gleichen Anmelderin verwiesen, nämlich "Maschinelles Verklipsen von Sandwichelementen". Die Besonderheit liegt hierbei darin, daß die obere Deckschicht zunächst in etwas schräger Orientierung zur Kassette abgesenkt wird, dann eine Rasteinrichtung an einer Kante in Eingriff gebracht wird und die obere Deckschicht dann in eine flächige Anlage überführt wird, wobei eine andere Rasteinrichtung an der entgegengesetzten Kante eingerastet wird.

Der zweite Durchlaufofen 8 entspricht technisch dem ersten Durchlaufofen 1 und wird nicht weiter erläutert. Auch die Temperatur der oberen Deckschicht ist natürlich für die weitere Reaktion des PUR/PIR-Schaums von Bedeutung. Die nunmehr geschlossene Kassette bildet ein Sandwichelement, das zur Ausreaktion des PUR/PIR-Schaums mit der Rollenfördereinrichtung 5 weitergefahren wird, bis es zu einer Doppelbandanlage 9 gelangt. Diese ist in Fig. 1 im rechten Bereich angedeutet. Dabei ist jedoch nur der Einlauf in die Doppelbandanlage 9 gezeichnet. Die Doppelbandanlage 9 ist konventionell aufgebaut und wird daher nicht in weiteren Einzelheiten dargestellt. Sie dient dazu, den Abstand der beiden Deckschichten und damit die Stärke des fertigen Sandwichelements zu justieren und bei einer Ausreaktion des PUR/PIR-Schaummaterials gewissermaßen als Anschlag vorzugeben. Dabei wird eine geeignete Temperatur für die Ausreaktion des Schaummaterials eingestellt.

Die Doppelbandanlage 9 weist als Sicherheitseinrichtung eine Oberdruckrolle am Einlauf auf, mit der eine Höhenkontrolle vorgenommen wird. Wenn zu starke Sandwichelemente eingefahren, bzw. durch nicht korrekte Aufklipsung der oberen Deckschicht Überhöhungen erzeugt werden, schaltet die Oberdruckrolle die Rollenfördereinrichtung 5 aus und führt damit zu einer Betriebsunterbrechung. Dies kann vor allem dann vorkommen, wenn bei der erwähnten "bunten Reihe" von Sandwichelementen versehentlich Typen eingefahren werden, für die die Doppelbandanlage 9 nicht ausgelegt ist. Als weitere Sicherheitsmaßnahme verfügt die Doppelbandanlage 9 über eine Druckbegrenzung. Wenn also beispielsweise versehentlich zu viel Schaummaterial eingebracht wurde, so daß die Ausreaktion des Schaums zu einem über einem bestimmten Schwellenwert liegenden Druck des Sandwichelements auf die Doppelbandanlage 9 führt, so gibt letztere nach, um mechanische Schäden zu vermeiden. Auch dieses Risiko hat im wesentlichen mit der erfindungsgemäßen Möglichkeit des Beschäumens und Schließens verschiedener Sandwichelemente in einer einzigen Anlage zu tun. Beispielsweise kann beim Einschleusen von Kassetten in den Durchlaufofen 1 ein Fehler vorkommen, so daß die Steuerung der Beschäumstation 6 eine für das tatsächlich vorhandene Sandwichelement zu große Schaummaterialmenge einbringt.

Bei den erwähnten Produktionsunterbrechungen ist die oben angedeutete besondere Funktionsweise der Durchlauföfen 1 und 8 von Vorteil.

Fig. 2 zeigt einen Ausschnitt aus Fig. 1, wobei zusätzlich die bereits erwähnten Kassetten 15 eingezeichnet sind. Man erkennt deutlich, daß die Kassetten 15 bereits in dem Durchlaufofen 1, wo sie gestrichelt angedeutet sind, voneinander getrennte, also vereinzelte Kassetten sind. Diese werden als individuelle Objekte über die Segmente 3 und 4 der Riemenfördereinrichtung in den Durchlaufofen 1 transportiert, dann in der Winkelstation auf die Rollenfördereinrichtung 5 übergeben, über die sie über die Beschäumungsstation 6 und Einklipsvorrichtung 7 zur Doppelbandanlage 9 laufen. Während dieses gesamten Ablaufs sind die Kassetten 15 von einander unabhängige Objekte. Beispielsweise können noch vor der Doppelbandanlage 9 fehlerhafte Sandwichelemente über die Vorrichtung 36 ausgeschleust werden, so daß sie nicht in die Doppelbandanlage 9 geraten. Dies kann beispielsweise der Fall sein, wenn die Oberdruckrolle der Doppelbandanlage 9 anspricht. Dadurch entsteht eine Lücke in der Folge von Sandwichelementen. Konkret greifen hierzu Transportriemen der Transporteinrichtung 36 zwischen die Rollen der Rollenfördereinrichtung 5, wobei sie auf- und abbewegbar sind. Im abgesenkten Zustand fahren die Sandwichelemente über sie hinweg in die Doppelbandanlage 9 ein. Wenn sie hochgefahren sind, können Ausschußsandwichelemente in umgekehrter Richtung von der Rollenfördereinrichtung 5 weggezogen werden.

Im übrigen erkennt man in Fig. 2, daß die Kassetten 15 nicht erst vor der Beschäumungsstation 6 vereinzelt sind, sondern bereits als vereinzelte Kassetten 15 in den Durchlaufofen 1 eingeschleust werden. Dies ist bei dem vorliegenden Beispiel sinnvoll, weil das Vorwärmen in dem Ofen 1 für das PUR/PIR-Beschäumen notwendige Vorbedingung ist.

Es würde jedoch auch im Rahmen der Erfindung liegen, die Kassetten 15 erst vor der Beschäumstation 6 zu vereinzelnen, also entweder als vereinzelte Kassetten ohne Vorwärmofen einzuschleusen oder nach einem Vorwärmschritt zu vereinzelnen. Auch im letzteren Fall bietet die Erfindung Vorteile, z.B. die Möglichkeit, den für das Einklipsen in der automatischen Einklipsvorrichtung 7 kurzfristig erforderlichen Stillstand der Kassetten 15 in einen insgesamt kontinuierlichen Transport und einen kontinuierlichen Betrieb der Doppelbandanlage 9 einzugliedern. Im vorliegenden Fall geschieht dies dadurch, daß sich die Kassetten 15 auf dem Weg von der Winkelstation am Anfang der Rollentransportvorrichtung 5 durch die Beschäumstation 6 hindurch bis zu der automatischen Einklipsvorrichtung 7 mit einer gegenüber der Doppelbandanlagengeschwindigkeit von 10,3 m/Min. erhöhten Geschwindigkeit von 21 m/Min. bewegen. Auch nach der kurzen Pause in der automatischen Einklipsvorrichtung 7 laufen die darin geschlossenen Sandwichelemente mit der selben erhöhten Geschwindigkeit weiter bis zur Doppelbandanlage 9. Unter Berücksichtigung der Pause ergibt sich damit der Mittelwert von 10,3 m/Min. Damit kann eine gleichmäßige Taktung der gesamten Produktionsanlage einschließlich der Durchlauföfen 1 und 8 von 12 Sek. pro Tür erreicht werden.

Fig. 2 zeigt bei den auf der Rollentransportvorrichtung 5 liegenden Kassetten 15 ferner, daß diese unterschiedlichen Typs sind. Das ist durch die angedeuteten Fensterausschnitte symbolisiert; es können jedoch auch andere Unterschiede, beispielsweise im Format oder im Material vorliegen. Bei dem erfindungsgemäßen Verfahren ist es eben ohne weiteres möglich, eine "bunte Reihe" verschiedener Sandwichelemente zu verarbeiten. Dazu müssen lediglich die Steuerungen der Beschäumungsstation 6 und der Einklipsvorrichtung 7 mit den Daten für diese bunte Reihe versorgt sein.

In dem speziellen Fall unterschiedlicher Fensterausschnitte in den Türen ist zudem das bereits erwähnte Beschäumungsverfahren mit den zweidimensional verfahrbaren Mischköpfen von Vorteil. Damit können zeitoptimierte Programme abgefahren werden, die auf die jeweiligen Ausschnitte optimal Rücksicht nehmen und dabei eine gute Flächenhomogenität des Schaummaterials erzielen.

Bei dem hier vorliegenden Ausführungsbeispiel sind die oberen Deckschichten 35 (in dem Durchlaufofen 8 skizziert) ebenfalls vereinzelte Elemente. Dies ist im Rahmen der Erfindung jedoch nicht notwendig. Es wäre auch denkbar, die Kassetten 15 mit den oberen Deckschichten 35 zu verbinden, wobei diese oberen Deckschichten von einem kontinuierlichen Band gebildet werden, die zuvor vereinzelten Kassetten 15 also wieder miteinander verbinden. Dann könnte vor der Verbindung, zwischen der Verbindung und dem Einlaufen in die Doppelbandanlage 9 oder auch hinter der Doppelbandanlage 9 eine Vereinzelung der Sandwichelemente erfolgen.

## Patentansprüche

1. Verfahren zum Herstellen eines Sandwichelements aus einer unteren und einer oberen Deckschicht (35), einem die Deckschichten in einem Außenrandbereich verbindenden Rahmen und einem Schaummaterial zwischen den Deckschichten und innerhalb des Rahmens,
bei dem das Schaummaterial oder eine Vorläuferflüssigkeit dazu aus einer Auftragsvorrichtung (6) aufgebracht wird in eine oben offene, vereinzelte Kassette (15) aus der unteren Deckschicht und dem Rahmen, die Kassette (15) danach mit der oberen Deckschicht (35) verbunden wird und die mit der oberen Deckschicht (35) verbundene Kassette (15) in eine Doppelbandanlage (9) eingefahren wird,
**dadurch gekennzeichnet, dass** nacheinander mit derselben Auftragsvorrichtung (6) verschiedene Kassetten (15) unterschiedlichen Typs, d. h. mit unterschiedlichen verwendeten Materialien oder Formaten oder Ausschnitten, in bunter Reihe verarbeitet werden.

2. Verfahren nach Anspruch 1, bei dem das Schaummaterial ein PUR/PIR-Schaum bzw. die Vorläuferflüssigkeit ein zu PUR/PIR-Schaum ausreagierendes Reaktionsgemisch ist.

3. Verfahren nach einem der vorstehenden Ansprüche, bei dem das Sandwichelement ein Türelement ist.

4. Verfahren nach einem der vorstehenden Ansprüche, bei dem die Auftragsvorrichtung (6) einen selbstreinigenden Rezirkulationsmischkopf aufweist.

5. Verfahren nach einem der vorstehenden Ansprüche, bei dem die Doppelbandanlage (9) druckbegrenzt ist.

6. Verfahren nach einem der vorstehenden Ansprüche, bei dem der Doppelbandanlage (9) eine Oberdruckrolle zur Höhenkontrolle vorgeschaltet ist.

7. Verfahren nach einem der vorstehenden Ansprüche, bei dem die Kassetten (15) vor dem Aufbringen des Schaummaterials oder der Vorläuferflüssigkeit in einem Durchlaufofen (1) mit Hilfe einer Fördereinrichtung (3, 4) über eine Ofenstrecke gefördert und erwärmt werden, so daß die Kassetten (15) am Ende der Förderstrecke eine Prozeßtemperatur erreichen, wobei der Durchlaufofen (1) in eine Mehrzahl von den Kassetten (15) durchfahrene Ofenzonen aufgeteilt ist und bei einer vorübergehenden Betriebsunterbrechung und damit verbundenem Stillstand der Fördereinrichtung (3, 4) jede Ofenzone mit in solcher Weise individuell verringerter Temperatur betrieben wird, daß in der Ofenzone befindliche Kassetten (15) im wesentlichen eine Zonenpausentemperatur beibehalten, die im wesentlichen der Temperatur einer Kassette (15) in der jeweiligen Ofenzone im Normalbetrieb entspricht, so daß nach Wiederaufnahme des Normalbetriebs keine wesentliche Überhitzung der Kassetten (15) über die vorgegebene Prozeßtemperatur vorliegt.

8. Verfahren nach einem der vorstehenden Ansprüche, bei der nach dem Aufbringen des Schaummaterials oder der Vorläuferflüssigkeit Rasteinrichtungen der oberen Deckschicht (35) und des Rahmens der Kassette (15) an zumindest zwei entgegengesetzten Außenkanten des aus den Deckschichten und dem Rahmen mit der Füllung gebildeten Sandwichelements in Eingriff gebracht werden, so daß der Rahmen und die obere Deckschicht (35) verbunden sind, wobei die Rasteinrichtungen durch eine automatische Einklipsvorrichtung (7) maschinell in Eingriff gebracht werden und die automatische Einklipsvorrichtung (7) unter relativer Schräglage der oberen Deckschicht (35) und der Kassette (15) zunächst die Rasteinrichtung auf einer der beiden Seiten in Eingriff bringt und danach unter Aufrechterhaltung dieses Eingriffs die Schräglage in eine Anlage überführt, wobei bei Herstellung der Anlage die Rasteinrichtung auf der anderen der beiden Seiten in Eingriff gebracht wird.

9. Verfahren nach einem der vorstehenden Ansprüche, bei dem die Auftragsvorrichtung (6) bei der Beschichtung mit dem Schaummaterial oder der Vorläuferflüssigkeit eine Austrittsöffnung zweidimensional bewegt, wobei eine Richtung einer Förderrichtung der Kassette (15) und die andere Richtung einer Querrichtung dazu entspricht.

10. Produktionsanlage zur Durchführung des Verfahrens nach einem der vorstehenden Ansprüche mit
einer Auftragsvorrichtung (6) zum Aufbringen von Schaummaterial oder einer Vorläuferflüssigkeit dazu in eine oben offen, vereinzelte Kassette (15) aus einer unteren Deckschicht und einem Rahmen,
einer Einrichtung (7) zum danach Verbinden der Kassette (15) mit einer oberen Deckschicht (35),
einer Doppelbandanlage (9) zur Festlegung des Abstands der beiden Deckschichten und Temperieren des Schaummaterials für eine vollständige Reaktion des Schaummaterials, und
einer Einrichtung (5) zum Einfahren der mit der oberen Deckschicht (35) verbundenen Kassette (15) in die Doppelbandanlage (9),
**dadurch gekennzeichnet, dass** die Produktionsanlage dazu ausgelegt ist, nacheinander mit derselben Auftragsvorrichtung (6) verschiedene Kassetten (15) unterschiedlichen Typs, d. h. mit unterschiedlichen verwendeten Materialien oder Formaten oder Ausschnitten in bunter Reihe zu verarbeiten und Steuerungen der Auftragsvorrichtung (6) und der Einrichtung (7) zum Verbinden der Kassette (15) mit der oberen Deckschicht (35) mit Daten für diese Verarbeitung von Kassetten (15) unterschiedlichen Typs in der bunten Reihe ausgestattet sind.

## Claims

1. A method of producing a sandwich element from a lower and an upper cover layer (35), a frame connecting said cover layers in a peripheral region and a foam material between said cover layers and inside said frame,
in which said foam material or a precursor liquid therefor are applied from an application device (6) into a singled cassette (15), being open at its top, of said lower cover layer and said frame, and said cassette (15) is connected with said upper cover layer (35) thereafter, and said cassette (15) connected with said upper cover layer (35) is conveyed into a double band press (9),
**characterized in that** several cassettes (15) of differing type, i.e. with different used materials or formats or openings are treated with said same application device (6) succeedingly in mixed order.

2. A method according to claim 1, in which said foam material is a PUR/PIR-foam and said precursor liquid is a reaction mixture reacting to a PUR/PIR-foam, respectively.

3. A method according to one of the preceding claims, in which said sandwich element is a door element.

4. A method according to one of the preceding claims, in which said application device (6) comprises a self-cleaning recirculation mixing head.

5. A method according to one of the preceding claims, in which said double band press (9) is pressure-limited.

6. A method according to one of the preceding claims, in which an upper pressure roll is provided upstream of said double band press (9) for height control.

7. A method according to one of the preceding claims, in which said cassettes (15) are conveyed and heated in a continuous furnace (1) along a furnace distance by means of a conveyor (3, 4) before said introducing of said foam material or precursor liquid so that said cassettes (15) have reached a process temperature at the end of said conveyor distance, wherein said continuous furnace (1) is divided into a plurality of furnace zones passed by said cassettes (15) and wherein each furnace zone, during a temporary interruption of operation and resulting stopping of said conveyor (3, 4), is operated with a temperature individually reduced in such manner that cassettes (15) in said furnace zone maintain essentially a zone interruption temperature essentially corresponding to the temperature of a cassette (15) in the respective furnace zone during normal operation so that after resume of normal operation there is no substantial overheating of said cassettes (15) over said given process temperature.

8. A method according to one of the preceding claims, wherein, after application of said foam material or precursor liquid, latch means of said upper cover layer (35) and said frame of said cassette (15) are engaged at at least two opposed outer edges of said sandwich element of said cover layers and said frame with said filling so that said frame and said upper cover layer (35) are connected, wherein said latch means are engaged automatically by an automatic clipping device (7) and said automatic clipping device (7) engages primarily said latch means at one of both sides, said upper cover layer (35) and said cassette (15) being mutually inclined therein, and thereafter transforms said inclination into an abutment while maintaining said engagement, wherein in achieving said abutment said latch means on the other of both sides is engaged.

9. A method according to one of the preceding claims, in which said application device (6) two-dimensionally moves a discharge orifice during coating with said foam material or precursor liquid, wherein one direction corresponds to a conveying direction of said cassette (15) and the other direction corresponds to a transversal direction thereto.

10. A production installation for executing the method according to one of the preceding claims comprising
an application device (6) for applying foam material or a precursor liquid therefor into a singled cassette (15), being open at its top, of said lower cover layer and said frame,
a device (7) for connecting said cassette (15) with an upper cover layer (35) thereafter,
a double band press (9) for defining the distance of said both covers layers and tempering said foam material for a complete reaction of said foam material, and a device (5) for conveying said cassette (15) connected with said upper cover layer (35) into said double band press (9),
**characterized in that** said production installation is adapted to treat several cassettes (15) of differing type, i.e. with differing used materials or formats or openings, with said same application device (6) sequentially in mixed order,
and control devices of said application device (6) and said device (7) for connecting said cassette (15) with said upper cover layer (35) are provided with data for this treatment of cassettes (15) of differing type in said mixed order.

## Revendications

1. Procédé de fabrication d'un panneau sandwich constitué de plaques de parement inférieure et supérieure (35), d'un cadre reliant ces plaques sur leur périmètre et d'une mousse entre les plaques de parement et à l'intérieur du cadre,
au cours duquel la mousse ou la préparation liquide pour mousse est appliquée à l'aide d'une installation d'application (6) dans un caisson (15) ouvert sur sa partie supérieure, constitué de la plaque de parement inférieure et du cadre, la plaque de parement supérieure (35) est fixée par la suite sur le caisson (15), le caisson (15), avec la plaque de parement supérieure fixée, est amené dans un convoyeur à double bande (9)
**caractérisé par le fait que** différents caissons (15) de différents types, c'est-à-dire pour lesquels différents matériaux ou différents formats ou différentes coupes ont été utilisés, peuvent être mis successivement en oeuvre dans la même installation d'application, dans une ordre mixte.

2. Procédé suivant la revendication 1, pour lequel la mousse est une mousse PUR/PIR, resp. la préparation liquide est un mélange réactif pour mousse PUR/PIR.

3. Procédé suivant l'une des revendications précédentes, pour lequel le panneau sandwich est un élément de porte.

4. Procédé suivant l'une des revendications précédentes, pour lequel l'installation d'application (6) présente une tête de mélange à recirculation auto-nettoyante.

5. Procédé suivant l'une des revendications précédentes, pour lequel le convoyeur à double bande (9) est limité en charge.

6. Procédé suivant l'une des revendications précédentes, pour lequel un rouleau presseur supérieur est monté en amont du convoyeur à double bande (9) pour le contrôle de la hauteur.

7. Procédé suivant l'une des revendications précédentes, pour lequel les caissons (15) sont transportés et réchauffés dans un four continu (1) à l'aide d'un convoyeur (3, 4) sur une certaine distance du four, avant l'introduction de la mousse ou de la préparation liquide pour mousse expansée, de manière à ce que les caissons (15) atteignent en fin de transport une température de process donnée, le four continu (1) étant divisé en plusieurs zones traversées par les caissons (15), et lorsque survient une interruption temporaire de production, associée à un arrêt du convoyeur (3, 4), chaque zone de four est portée séparément à une température plus basse, de manière à ce que les caissons (15) se trouvant dans la zone de four soient maintenus à une température de pause dans cette zone, correspondant pour l'essentiel à la température d'un caisson (15) dans la zone correspondante en exploitation normale, de manière qu'après reprise du fonctionnement normal, il n'existe pas de surchauffe significative des caissons (15) par rapport à la température de consigne du process.

8. Procédé suivant l'une des revendications précédentes, pour lequel, après l'application de la mousse ou de la préparation liquide pour mousse expansée, des dispositifs d'encliquetage de la plaque de parement supérieure (35) et du cadre du caisson (15) sont mis en place sur deux bordures opposées au moins du panneau sandwich constitué des plaques de parement et du cadre avec le matériau de remplissage, de manière à fixer la plaque de parement supérieure (35) sur le cadre, les dispositifs d'encliquetage étant automatiquement mis en place par une installation automatique d'encliquetage (7), l'installation d'encliquetage (7) met tout d'abord en prise le dispositif d'encliquetage sur l'un des deux cotés, la plaque de parement supérieure (35) et le caisson (15) présentant un angle relatif entre eux, puis, en maintenant cette prise, les fait changer de position et met en prise le dispositif d'encliquetage sur l'autre coté pendant cette opération.

9. Procédé suivant l'une des revendications précédentes, pour lequel l'installation d'application (6), lors de l'application de la mousse ou de la préparation liquide pour mousse expansée, déplace une buse dans deux directions, une direction correspondant à celle transport du caisson (15) et l'autre direction étant perpendiculaire.

10. Une installation de production pour l'exécution du procédé suivant l'une des revendications précédentes avec
une installation d'application (6) pour l'apport de la mousse ou d'une préparation liquide pour mousse expansée dans un caisson (15) ouvert sur sa partie supérieure, constitué d'une plaque de parement inférieure et d'un cadre,
un dispositif (7) pour la fixation d'une plaque de parement supérieure (35) sur le caisson (15),
un convoyeur à double bande (9) pour fixer la distance des deux plaques de parement et mettre en température la mousse afin d'obtenir une réaction totale du matériau et
un dispositif (5) pour le transport du caisson (15), avec la plaque de parement supérieure (35) fixée, dans le convoyeur à double bande (9),
**caractérisé par le fait que** l'installation de production est conçue de manière à mettre en oeuvre avec la même installation d'application (6), successivement et dans un ordre indifférent, différents caissons (15) de différents types, c'est-à-dire pour lesquels différents matériaux ou différents formats ou différentes coupes ont été utilisés,
et **par le fait que** des commandes de l'installation d'application (6) et du dispositif (7) de fixation de la plaque de parement supérieure (35) au caisson (15) contiennent les données nécessaires à cette mise en oeuvre de caissons (15) de différents types et dans un ordre mixte.
